# EUROPEAN PATENT SPECIFICATION

(11) **EP 3 893 044 B1**
(45) Date of publication and mention of the grant of the patent: **12.11.2025**
(21) Application number: 19893831.8
(22) Date of filing: 06.12.2019
(51) Int. Cl.: G02B 1/14, G02B 5/20, G02C 7/10

(54) **OPTICAL MEMBER, CURABLE COMPOSITION, AND PRODUCTION METHOD FOR OPTICAL MEMBER**
OPTISCHES ELEMENT, HÄRTBARE ZUSAMMENSETZUNG UND HERSTELLUNGSVERFAHREN FÜR OPTISCHES ELEMENT
ÉLÉMENT OPTIQUE AINSI QUE PROCÉDÉ DE FABRICATION DE CELUI-CI, ET COMPOSITION DURCISSABLE

(30) Priority: 06.12.2018 JP 2018229139
(43) Date of publication of application: 13.10.2021
(73) Proprietor: Hoya Lens Thailand Ltd., Pathumthani 12130 (TH)
(72) Inventor: SEKIGUCHI, Yusuke, Tokyo 160-8347 (JP); YAMASHITA, Teruo, Tokyo 160-8347 (JP); KUBOTA, Shogo, Tokyo 160-8347 (JP)
(74) Representative: Hoffmann Eitle
(86) International application number: PCT/JP2019/047836
(87) International publication number: WO 2020/116617

(56) References cited:
- WO-A1-2012/026151
- WO-A1-2014/119736
- WO-A1-2018/124204
- JP-A- 2001 288 412
- JP-A- 2008 158 483
- JP-A- 2009 256 563
- JP-A- H0 593 170
- JP-A- H05 287 241
- JP-A- H05 287 241
- JP-A- H08 120 065
- JP-A- H09 265 059

## Description

### Technical Field

The present disclosure relates to an optical member having a hard coat layer, and to a method for producing an optical member.

### Background Art

While optical members such as a plastic eyeglass lens are lightweight and excellent in impact resistance as compared to glass, they are insufficient in surface hardness. Therefore, such optical members are covered with a hard coat layer to enhance the scratch resistance.

JP-A-09-265059 describes an eyeglass lens containing, in a lens substrate and/or a hard coat layer formed thereon, one or more ultraviolet absorbers selected from a benzophenone ultraviolet absorber, a benzotriazole ultraviolet absorber, a cyanoacrylate ultraviolet absorber and a sterically hindered amine ultraviolet absorber, and having a multi-layer antireflective film including a titanium dioxide layer having at least a predetermined thickness, formed on the hard coat layer. This document describes that the eyeglass lens can block ultraviolet light having a wavelength of not more than 400 nm, and can prevent the occurrence of cracking in the antireflective film even when the lens is exposed to ultraviolet irradiation during its long-term outdoor use.

JP-A-2001-288412 relates to a coating composition for forming a coating layer on the surface of a plastic lens substrate having a primer layer, comprising (A) specified composite particles comprising 2 or more types of metal oxide and having a particle size of 1-100 µm, (B) silane compound having at least one polymerizable reactive group and (C) a UV absorber.

JP-A-H05-287241 concerns a hard-coating agent for an optical article, the agent mainly consisting of a (A) an organosilicon compound of the formula R¹R²ₐSi(OR³)₃₋ₐ or a hydrolysate thereof, (B) one or more fine particles selected from titania, antimony oxide, cerium oxide, tin oxide, tungsten oxide, and iron oxide and (C) at least one UV absorber selected from a benzophenone derivative, a benzotriazole derivative and a cyanoacrylate derivative.

JP-A-2009-256563 discloses a thermosetting hard coating agent composition containing, relative to 100 pbw in total of components (A)-(C), 15-70 pbw of poly(methyl) glycidyl ether compound (A), 15-70 pbw of a cationically polymerizable group containing silsesquioxane compound (B), 15-70 pbw of a silane compound (C), and 0.01-10.0 pbw of a metal chelate compound (D) . Optional further constituents are metal oxide fine particles (E), a silicate compound (F) and a compound having a dimethyl siloxane backbone (G).

WO 2012/026151 describes a photosensitive paste comprising an inorganic component containing a low softening point glass powder, a photosensitive organic component, a benzotriazole compound of a specified general formula (1), a photopolymerization initiator, and a solvent.

### Summary of Invention

### Technical Problem

However, with respect to the hard coat layer described in JP-A-09-265059, the optical member sometimes suffers from yellowing due to yellowing of the plastic substrate when the optical member is exposed to ultraviolet light over a long period of time. A demand therefore exists for a higher level of yellowing resistance which enables the optical member to resist yellowing over a longer period of time.

Embodiments of the present disclosure relate to an optical member which exhibits excellent yellowing resistance under ultraviolet irradiation, and a method for producing the optical member.

In another aspect, the hard coat layer described in JP-A-09-265059 sometimes suffers from cracking in the hard coat layer when the optical member is exposed to light in a high-humidity environment over a long period of time.

Embodiments of the present disclosure relate to an optical member which exhibits excellent cracking resistance under light irradiation and high-humidity conditions, a curable composition, and a method for producing the optical member.

### Solution to Problem

The present inventors have found that inclusion of a predetermined amount of an ultraviolet absorber in a hard coat layer enhances the yellowing resistance under ultraviolet irradiation.

Thus, the present invention provides an optical member comprising
(i) a plastic substrate and
(ii) a hard coat layer which is a cured product of a curable composition comprising
   - an inorganic oxide and
   - a UV-absorber, which is a compound of formula (1): 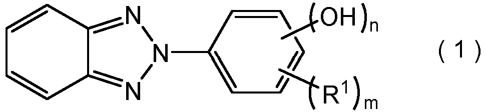 wherein n is an integer of 1-3, R¹ is an aliphatic C₁₋₃-hydrocarbon group, and m is 0 or 1;
   wherein the content of the UV-absorber in the cured product is 0.5-15 mass%.

Also, the present invention provides a method for producing an optical member, comprising coating a curable composition as defined above onto a plastic substrate and curing the composition to form a hard coat layer.

Preferred embodiments of the invention are as defined in the appended dependent claims.

### Advantageous Effects of Invention

The above-described embodiments of the present disclosure can provide an optical member which exhibits excellent yellowing resistance under ultraviolet irradiation, and a method for producing the optical member.

The embodiments of the present disclosure can also provide an optical member which exhibits excellent cracking resistance under light irradiation and high-humidity conditions, a curable composition, and a method for producing the optical member.

### Brief Description of Drawings

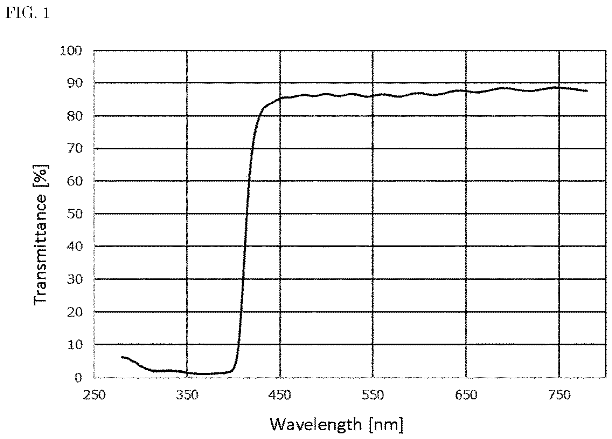

FIG. 1 is a transmittance spectrum of the eyeglass lens obtained in Example 3.

### Description of Embodiments

### [Optical Member]

An optical member according to an embodiment of the present disclosure includes a plastic substrate and a hard coat layer.

The hard coat layer is a cured product of a curable composition including an inorganic oxide and an ultraviolet absorber.

The content of the ultraviolet absorber in the cured product is 0.5-15 mass%.

Such a feature makes it possible to provide an optical member which exhibits excellent yellowing resistance under ultraviolet irradiation, a curable composition, and a method for producing the optical member.

Such a feature also makes it possible to provide an optical member which exhibits excellent cracking resistance under light irradiation and high-humidity conditions, a curable composition, and a method for producing the optical member.

Terms as used herein have the following meanings.

"Active ingredients of the curable composition" refers to ingredients other than a solvent (including water), contained in the curable composition.

"The number of carbon atoms" of a group having a substituent refers to the number of carbon atoms of the moiety excluding the substituent.

"Inorganic oxide having an absorption edge at a wavelength of 300-450 nm" refers to such an inorganic oxide that the lower limit (absorption edge) of the transmission wavelength range of a vapor-deposited film formed solely of the inorganic oxide is 300-400 nm.

Titanium oxide has an absorption edge at 400 nm, cesium oxide at 400 nm, tantalum oxide at 350 nm, zirconium oxide at 330 nm, and yttrium oxide at 300 nm.

Silicon oxide has an absorption edge at 200 nm, aluminum oxide at 200 nm, and magnesium oxide at 200 nm.

For an inorganic oxide other than the above oxides, the transmission wavelength range of a vapor-deposited film formed solely of the inorganic oxide is measured, and the lower limit is determined as the absorption edge of the inorganic oxide.

Examples of the optical member include an eyeglass lens, a sports goggle, a sun visor, a safety shield, and a helmet shield. Among them, an eyeglass lens is preferred.

### <Hard Coat Layer>

The hard coat layer is a cured product of a curable composition.

The hard coat layer is formed, for example, by coating the curable composition onto a plastic substrate, and curing the curable composition. The hard coat layer is preferably formed on both surfaces of the plastic substrate from the viewpoint of further enhancing yellowing resistance.

### [Curable Composition]

From the viewpoint of obtaining an optical member which exhibits excellent cracking resistance, the curable composition contains an inorganic oxide and an ultraviolet absorber.

### (Inorganic Oxide)

Examples of the inorganic oxide include silicon oxide, titanium oxide, aluminum oxide, zirconium oxide, iron oxide, antimony oxide, tin oxide, and tungsten oxide.

The content of an inorganic oxide having an absorption edge at a wavelength of 300-450 nm is 0-50 mass% per 100 mass% of the total amount of inorganic oxide in the curable composition. The content of the inorganic oxide having an absorption edge at a wavelength of 300-450 nm is preferably 0-30 mass%, more preferably 0-20 mass%, even more preferably 0-10 mass%, and still more preferably 0-1 mass% of the total amount of inorganic oxide.

Examples of the inorganic oxide having an absorption edge at a wavelength of 300-450 nm include titanium oxide, zirconium oxide, antimony oxide, tin oxide, and tungsten oxide.

On the other hand, examples of inorganic oxides, not corresponding to the inorganic oxide having an absorption edge at a wavelength of 300-450 nm, include silicon oxide, aluminum oxide, and magnesium oxide.

These oxides may be used singly or in a combination of two or more.

The total content of titanium oxide, zirconium oxide, tantalum oxide, antimony oxide, tin oxide, tungsten oxide, and yttrium oxide is 0-50 mass% per 100 mass% of the total amount of inorganic oxide. The total content is preferably 0-30 mass%, more preferably 0-20 mass%, even more preferably 0-10 mass%, and still more preferably 0-1 mass% of the total amount of inorganic oxide.

An inorganic oxide sol of inorganic oxide particles or the like may be added as an inorganic oxide.

The inorganic oxide particles may be surface-treated with an organic processing agent, for example.

The average particle size of the inorganic oxide particles is preferably 1-100 nm, more preferably 5-50 nm, and even more preferably 8-30 nm.

Values of the average particle size of the inorganic oxide particles are herein calculated from data on specific surface area as determined by the BET (Brunauer-Emmet-Teller equation) method.

The content of inorganic oxide in the curable composition is preferably 10-80 mass%, more preferably 20-70 mass%, and even more preferably 30-60 mass% per 100 mass% of the total amount of the active ingredients of the curable composition.

The content of inorganic oxide in the cured product is preferably 10-80 mass%, more preferably 20-75 mass%, even more preferably 40-70 mass%, and still more preferably 50-70 mass%.

An aqueous inorganic oxide sol, which is a dispersion of inorganic oxide particles in water, may be used as an inorganic oxide in the curable composition. When such an aqueous inorganic oxide sol is used, the inorganic oxide particles colloidally disperse in the curable composition. This achieves the effect of preventing the occurrence of a phenomenon of uneven distribution of the inorganic oxide particles in a coating film. An aqueous silicon oxide sol is preferred as the aqueous inorganic oxide sol.

### (Ultraviolet Absorber)

The ultraviolet absorber is a benzotriazole compound of the formula (1): 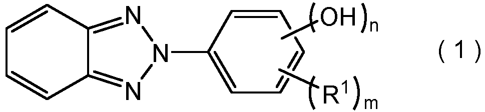
wherein n is an integer of 1-3, R¹ is an aliphatic hydrocarbon group having 1-3 carbon atoms, and m is 0 or 1.
n is preferably 2 or 3, more preferably 2 from the viewpoint of obtaining excellent solubility in the curable composition.
R¹ is, for example, methyl, ethyl or propyl. Among them, methyl is preferred.
m is preferably 0.

Examples of the benzotriazole compound include 2-(2,4-dihydroxyphenyl)-2H-benzotriazole and 2-(2-hydroxy-5-methylphenyl)-2H-benzotriazole. Among them, 2-(2,4-dihydroxyphenyl)-2H-benzotriazole is more preferred from the viewpoint of enhancing the transparency of the hard coat layer.

From the viewpoint of obtaining excellent yellowing resistance and from the viewpoint of obtaining excellent cracking resistance, the content of the ultraviolet absorber is 0.5-15 mass%, preferably 0.5-13 mass%, more preferably 2-12 mass%, and still more preferably 3-10 mass% per 100 mass% of the total amount of the active ingredients of the curable composition.

From the viewpoint of obtaining excellent yellowing resistance and from the viewpoint of obtaining excellent cracking resistance, the content of the ultraviolet absorber in the curable composition is preferably 0.5-10 mass%, more preferably 0.5-18 mass%, even more preferably 0.5-7 mass%, and still more preferably 1-5 mass%.

From the viewpoint of obtaining excellent yellowing resistance and from the viewpoint of obtaining excellent cracking resistance, the content of the ultraviolet absorber in the cured product is 0.5-15 mass%, preferably 1-13 mass%, more preferably 2-12 mass%, still more preferably 3-12 mass%, still more preferably 4-12 mass%, and still more preferably 6-12 mass%.

When the curable composition contains the below-described organosilane compound, the content of the ultraviolet absorber in the cured product is a theoretical value calculated in the following manner: It is assumed that Si-O-Si is formed from two Si-OR moieties of an organosilane compound, and all the -OR groups are eliminated. Therefore, the content of the ultraviolet absorber is calculated by subtracting the amount of the eliminated Si-OR groups.

### (Organosilane Compound)

The curable composition may contain an organosilane compound.

The organosilane compound has, for example, an organosilane moiety and an epoxy group. The organosilane moiety refers to a moiety having a silicon-carbon bond. The epoxy group refers to a three-membered ring moiety formed of carbon-carbon-oxygen.

The organosilane compound is preferably a compound represented by the formula (2): 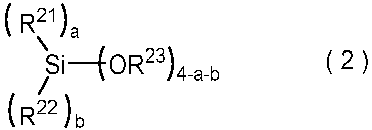 wherein R²¹ is a monovalent C₁₋₂₀-hydrocarbon group having an epoxy group or an epoxy group-containing substituent, R²² is alkyl, aryl, aralkyl or acyl, R²³ is alkyl, aryl, aralkyl or acyl, a is an integer of 1-4, and b is an integer of 0-3. (a + b) is an integer of ≤ 3.

The functional group in R²¹ is, for example, an epoxy group or a glycidyloxy group.

The number of carbon atoms of the hydrocarbon group of R²¹ is preferably ≥ 2, more preferably ≥ 3, and is preferably ≤ 15, more preferably ≤ 12, and even more preferably ≤ 10. The number of carbon atoms refers to the total number of carbon atoms of the hydrocarbon group containing the substituent.

Examples of R²¹ include γ-glycidoxymethyl, γ-glycidoxyethyl, γ-glycidoxypropyl, β-epoxycyclohexylmethyl, β-epoxycyclohexylethyl, and β-epoxycyclohexylpropyl.

The alkyl group of each of R²² and R²³ is preferably a linear, branched or cyclic C₁₋₈-alkyl group.

Examples of the alkyl group of each of R²² and R²³ include methyl, ethyl, n-propyl, isopropyl, n-butyl, isobutyl, sec-butyl, tert-butyl, pentyl, hexyl, cyclopentyl, and cyclohexyl.

The aryl group of each of R²² and R²³ is preferably a C₆₋₁₀-aryl group. The aryl group is, for example, phenyl or tolyl.

The aralkyl group of each of R²² and R²³ is preferably a C₇₋₁₀-aralkyl group. The aralkyl group is, for example, benzyl or phenethyl.

The acyl group of each of R²² and R²³ is preferably a C₂₋₁₀-acyl group. The acyl group is, for example, acetyl.

Among them, R²² and R²³ are each preferably methyl or ethyl.

a is preferably an integer of 1-3, more preferably an integer of 1 or 2, and even more preferably 1.

b is preferably an integer of 0-3, more preferably an integer of 0 or 1, and even more preferably 0.

When a plurality of R²¹' s exist in the compound of the formula (2), the R²¹'s may be the same or different from each other. The same holds true for R²² and R²³.

Examples of the organosilane compound include 3-glycidoxypropyltrimethoxysilane, 3-glycidoxypropylmethyldimethoxysilane, 3-glycidoxypropylmethyldiethoxysilane, 3-glycidoxypropyltriethoxysilane, 3-isocyanatepropyltriethoxysilane, 3-aminopropyltriethoxysilane, 2-(3,4-epoxycyclohexyl)ethyltrimethoxysilane, and 3-ethyl-3-{[3-(triethoxysilyl)propoxy]methyl}oxetane. Among them, 3-glycidoxypropyltrimethoxysilane, 3-isocyanatepropyltriethoxysilane, and 3-aminopropyltriethoxysilane are preferred, and 3-glycidoxypropyltrimethoxysilane is more preferred.

The content of the organosilane compound is preferably 5-80 mass%, more preferably 10-70 mass%, even more preferably 15-60 mass%, and still more preferably 30-50 mass% per 100 mass% of the total amount of the active ingredients of the curable composition.

The content of a moiety derived from the organosilane compound in the cured product is preferably 5-80 mass%, more preferably 10-70 mass%, even more preferably 15-60 mass%, and still more preferably 30-50 mass%.

The content of a moiety derived from the organosilane compound in the cured product is a theoretical value as calculated by subtracting the amount of -OR groups eliminated based on the assumption that all the -OR groups are eliminated to form Si-O-Si.

### (Polyfunctional Epoxy Compound)

The curable composition may contain a polyfunctional epoxy compound. The polyfunctional epoxy compound is preferably not an organosilane compound.

Examples of the polyfunctional epoxy compound include sorbitol polyglycidyl ether, pentaerythritol polyglycidyl ether, trimethylolpropane polyglycidyl ether, resorcinol diglycidyl ether, neopentyl glycol diglycidyl ether, 1,6-hexanediol diglycidyl ether, hydrogenated bisphenol A diglycidyl ether, ethylene-polyethylene glycol diglycidyl ether, propylene-polypropylene glycol diglycidyl ether, allyl glycidyl ether, 2-ethylhexyl glycidyl ether, phenyl glycidyl ether, phenol polyethylene oxide adduct glycidyl ether, p-tert-butylphenyl glycidyl ether, lauryl alcohol polyethylene oxide adduct glycidyl ether, polybutadiene diglycidyl ether, and polyglycerol polyglycidyl ether.

When the curable composition contains a polyfunctional epoxy compound, the content of the polyfunctional epoxy compound is preferably 1-30 mass%, more preferably 3-20 mass%, and even more preferably 5-10 mass% of the total amount of the active ingredients of the curable composition.

When the curable composition contains a polyfunctional epoxy compound, the content of a moiety derived from the polyfunctional epoxy compound in the cured product is preferably 1-30 mass%, more preferably 3-20 mass%, and even more preferably 5-10 mass%.

### (Curing Catalyst)

The curable composition may contain a curing catalyst. The curing catalyst is, for example, tris(acetylacetonato)aluminum (III) [Al(acac)₃].

The content of the curing catalyst is preferably 0.1-20 mass%, more preferably 0.5-10 mass%, and even more preferably 1-5 mass% per 100 mass% of the total amount of the active ingredients of the curable composition.

The content of the curing catalyst in the cured product is preferably 0.1-20 mass%, more preferably 0.5-10 mass%, and even more preferably 1-5 mass%.

The curable composition may contain an organic solvent in order to form a uniform film.

The organic solvent is preferably at least one solvent selected from an ether solvent, an ester solvent, an acetal solvent, and a non-polar solvent. Specific examples include propylene glycol monomethyl ether (hereinafter also referred to as "PGM"), diacetone alcohol, methyl ethyl ketone, and ethylene glycol mono-n-propyl ether.

In addition to the above-described components, the curable composition can also contain known additives such as a leveling agent, a fluorine compound, a dye, a pigment, a photochromic agent, and an antistatic agent.

Among them, a fluorine compound is preferred from the viewpoint of enhancing cracking resistance under ultraviolet irradiation and high-humidity conditions.

Examples of the fluorine compound include sodium fluoride, potassium fluoride, hydrofluosilicic acid, potassium silicofluoride, fluoroboric acid, tin borofluoride, copper borofluoride, lead borofluoride, zinc borofluoride, sodium borofluoride, potassium borofluoride, ammonium acid fluoride, ammonium fluoride, zirconium potassium fluoride, potassium fluorotitanate, purified calcium fluoride, and potassium hexafluorophosphate.

The content of the fluorine compound is preferably 0.1-20 mass%, more preferably 0.5-10 mass%, and even more preferably 1-5 mass% per 100 mass% of the total amount of the active ingredients of the curable composition.

The content of the fluorine compound in the cured product is preferably 0.1-20 mass%, more preferably 0.5-10 mass%, and even more preferably 1-5 mass%.

The total amount of the active ingredients of the curable composition is preferably 1-70 mass%, more preferably 5-50 mass%, and even more preferably 10-40 mass% of the total amount of the curable composition.

The filler/matrix mass ratio (hereinafter also referred to simply as "F/M") in the curable composition is preferably 0.4-2.5, more preferably 0.6-2.0, and even more preferably 0.6-1.2.

The filler/matrix mass ratio refers to the mass ratio of the total amount of inorganic oxide to the total amount of the organosilane compound and the polyfunctional epoxy compound.

The curable composition can be obtained by mixing the above-described components. An exemplary method for producing the curable composition includes a step of mixing and stirring the inorganic oxide(s) and the ultraviolet absorber, and optionally the organosilane compound, the polyfunctional epoxy compound and the curing catalyst.

The curable composition can be used to form the hard coat layer of an optical member.

From the viewpoint of enhancing yellowing resistance, the thickness of the hard coat layer is preferably 0.5-50 µm, more preferably 5-20 µm, and even more preferably 1-5 µm.

### <Plastic Substrate>

Examples of the material of the plastic substrate include a polyurethane material such as a polythiourethane resin or a polyurethane resin; an epithio material such as a polysulfide resin; a polycarbonate material; and a diethylene glycol bisallyl carbonate material.

The material of the plastic substrate is preferably at least one resin selected from a polythiourethane resin, a polysulfide resin and a polyurethane resin, more preferably at least one resin selected from a polythiourethane resin and a polysulfide resin, and even more preferably a polythiourethane resin.

Examples of the plastic substrate include an eyeglass lens substrate, a goggle substrate, a safety shield substrate, and a helmet shield substrate. Among them, an eyeglass lens substrate is preferred.

The eyeglass lens substrate may be either a finished lens or a semifinished lens. There is no particular limitation on the surface shape of the lens substrate; the lens substrate may have any of e.g. a plane surface, a convex surface, and a concave surface.

The eyeglass lens of the present disclosure may be any of e.g. a unifocal lens, a multifocal lens, and a progressive power lens. For example, in the case of a progressive power lens, in general, a near vision zone and a transition zone (intermediate zone) are included in a lower area, while a distance vision zone is included in an upper area.

While there is no particular limitation on the thickness and the diameter of the eyeglass lens substrate, the thickness is generally 1-30 mm, and the diameter is generally 50-100 mm.

The refractive index ne of the eyeglass lens substrate is, for example, 1.50-1.80, and may be 1.53-1.80, or 1.55-1.80, or 1.58-1.80, or 1.60-1.80, or 1.67-1.80, or 1.70-1.80.

### <Other Layer (s)>

The optical member may additionally include a primer layer between the plastic substrate and the hard coat layer, and/or an antireflective layer on the hard coat layer.

In order to ensure the transparency of the optical member, the average transmittance of light having a wavelength of 380-780 nm of the optical member is preferably 60-90%, more preferably 70-98%, and even more preferably 75-95%.

The average transmittance of light having a wavelength of 380-780 nm is measured by the method described in the Examples below.

### [Optical Member Production Method]

From the viewpoint of obtaining an optical member which exhibits excellent yellowing resistance under ultraviolet irradiation, an optical member production method according to an embodiment includes a step of coating the above-mentioned curable composition onto the plastic substrate and curing the composition to form the hard coat layer.

The curable composition is coated onto the plastic substrate by a common method such as a dipping method, a spin method or a spray method. A dipping method and a spin method are preferred in terms of surface accuracy.

Prior to the coating of the curable composition onto the substrate, the substrate may be subjected to a chemical treatment with an acid, an alkali or an organic solvent, a physical treatment e.g. with plasma or ultraviolet light, or a cleaning treatment with a detergent.

The curable composition may be coated onto the plastic substrate either directly or via another layer.

The curing of the curable composition may be performed either by heating or by irradiation with light.

In the case of curing by heating, the curing temperature of the curable composition is preferably 60-180°C, more preferably 70-150°C, and even more preferably 80-130°C.

In the case of curing by heating, the heating time is preferably 30 minutes to 5 hours, more preferably 40 minutes to 4 hours, and even more preferably 45 minutes to 3 hours. Examples

The following examples illustrate the present invention in greater detail. The below-described operations and evaluations were performed in the atmosphere at room temperature (about 20-25°C) unless otherwise specified.

### [Measurement Methods]

### <Transmittance Spectrum>

Transmittances of light having a wavelength range of 280-780 nm were measured using a spectrophotometer "U-4100" (manufactured by Hitachi High-Technologies Corporation).

### <Average Transmittance of Light Having a Wavelength of 380-780 nm>

An average transmittance of light having a wavelength of 380-780 nm was calculated from the results of the above measurement of transmittances.

### [Evaluation Method]

### <UV Yellowing Resistance Test>

The YI value before UV irradiation was measured.

Thereafter, in an irradiation apparatus equipped with a UV lamp (UVA-340 lamp), the sample was irradiated with UV light for 4 hours under the conditions of a temperature of 45°C and an irradiance of 0.77 W/m², and then the lamp was turned off and kept off for 4 hours. This operation was repeated until the total UV irradiation time reached 6 days. The YI value after UV irradiation was measured.

The UV yellowing resistance was evaluated based on the YI value difference (ΔYI value) before and after UV irradiation.

The measurement of YI values was performed with transmitted light having a wavelength of 280-780 nm in an SCI (Specular Component Include) mode using a spectral transmittance measuring device (trade name "DOT-3", manufactured by Murakami Color Research Laboratory Co., Ltd.).

### <Cracking Resistance Test>

An optical member was prepared and, using a QUV ultraviolet fluorescent tube-type accelerated weathering tester (manufactured by Q-Lab Corporation), was irradiated with ultraviolet light at 0.77 W/m² for 10 days in a high-temperature and high-humidity environment of 45°C and 90% relative humidity. A geometric center area and a peripheral area of the optical member after the test were observed microscopically and evaluated in accordance with the following criteria.

### (Evaluation Criteria)

A: No crack was found in the geometric center area and the peripheral area of the optical member.
B: A crack was found in one of the geometric center area and the peripheral area of the optical member, whereas no crack was found in the other.
C: A crack was found in both of the geometric center area and the peripheral area of the optical member.
D: A clear crack was found in one of the geometric center area and the peripheral area of the optical member, while a slight crack was found in the other.
E: A clear crack was found in both of the geometric center area and the peripheral area of the optical member.

### <Example 1>

### (Preparation of Curable Composition)

The materials shown in Table 1 were mixed and stirred in a container, followed by filtration to obtain a curable composition.

### (Coating and Curing)

An eyeglass lens substrate (S +0.00D, refractive index 1.67, diameter 75 mm, thickness 5.0 mm, polythiourethane resin) was immersed in a 10 mass % aqueous sodium hydroxide solution at 45°C for 5 minutes, followed by sufficient drying.

Thereafter, the above-prepared curable composition was coated onto the substrate by a spin method (rotational speed: 1000 rpm).

The coated substrate was heated at 80°C for 20 minutes, and then heated at 110°C for 2 hours to thermally cure the curable composition and form a hard coat layer. The hard coat layer was formed on both surfaces of the substrate by the above operation. The thickness of the obtained hard coat layer was 3.1 µm.

The thus-obtained sample was evaluated by the method described above under the heading <UV Yellowing Resistance Test>. The results are shown in Table 1.

### <Examples 2 and 3 and Comparative Example 1>

A hard coat layer was formed in the same manner as in Example 1 except for changing the amounts of the components of the curable composition as shown in Table 1. The samples obtained were each evaluated by the method described above under the heading <UV Yellowing Resistance Test>. The results are shown in Table 1.

For the eyeglass lens produced in Example 3, the transmittance spectrum was measured. The results are shown in FIG. 1. The luminous transmittance was 80%.

**Table 1-1**

| | | | Example 1 | | | Example 2 | | |
|---|---|---|---|---|---|---|---|---|
| Curable compositio n | | | Amount (mass %) | Active incredient s (mess %)*1 | Cured product (mass %)*2 | Amount (mass %) | Active ingredient s (mass %)*1 | Cured product (mass %)*2 |
| | Inorganic oxide | Silica sol | 45.7 | 51.5 | 59.3 | 45.2 | 49.7 | 56.9 |
| | Organosilan e compound | Si-1 | 11.6 | 45.3 | 37.0 | 11.5 | 43.7 | 35.5 |
| | Curing catalyst | Al(acac)₃ | 0.6 | 2.3 | 2.7 | 0.6 | 2.3 | 2.6 |
| | UV absorber | UV-1 | 0.2 | 0.9 | 1.0 | 1.1 | 4.4 | 5.0 |
| | Solvent | PGM | 20.3 | - | - | 20.2 | - | - |
| | | MeOH | 21.6 | - | - | 21.4 | - | - |
| Evaluation | Yellowing resistance | YI value before UV irradiation | 3.0 | | | 3.1 | | |
| | | YI value after UV irradiation | 26.1 | | | 5.8 | | |
| | | ΔYI value *3 | 23.1 | | | 2.7 | | |

| | | | | | | | | |
|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction *3 ΔYI value = YI value after UV irradiation - YI value before UV irradiation | | | | | | | | |

**Table 1-2**

| | | | Example 3 | | | Comp. Example 1 | | |
|---|---|---|---|---|---|---|---|---|
| Curable composition | | | Amount (mass %) | Active ingredients mass %)*1 | Cured product (mass %)*2 | Amount (mass %) | Active ingredients (mass %)*1 | Cured product (mass %)*2 |
| | Inorganic oxide | Silica sol | 44.7 | 47.4 | 53.9 | 45.8 | 51.9 | 59.9 |
| | Organosilane compound | Si-1 | 11.3 | 41.7 | 33.6 | 11.6 | 45.7 | 37.4 |
| | Curing catalyst | Al(acac)₃ | 0.6 | 2.2 | 2.5 | 0.6 | 2.4 | 2.7 |
| | UV absorber | UV-1 | 2.4 | 8.8 | 10.0 | - | - | - |
| | Solvent | PGM | 19.9 | - | - | 20.4 | - | - |
| | | MeOH | 21.1 | - | - | 21.6 | - | - |
| Evaluation | Yellowing resistance | YI value before UV irradiation | 3. 4 | | | 2.9 | | |
| | | YI value after UV irradiation | 5.4 | | | 27.0 | | |
| | | ΔYI value *3 | 2.0 | | | 24.1 | | |

| | | | | | | | | |
|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction *3 ΔYI value = YI value after UV irradiation - YI value before UV irradiation | | | | | | | | |

The materials listed in Table 1 are as follows.
(Inorganic Oxide) Silica sol: aqueous silicon oxide sol (dispersion medium: water)
(Organosilane Compound) Si-1: 3-glycidoxypropyltrimethoxysilane
(Curing Catalyst) Al(acac)₃: tris (acetylacetonato) aluminum (III) [Al(acac)₃]
(Solvent)
   PGM: propylene glycol monomethyl ether
   MeOH: methanol
(Ultraviolet Absorber) UV-1: 2-(2,4-dihydroxyphenyl)-2H-benzotriazole

As can be seen from comparison of the Examples with the Comparative Example, the plastic substrates of the Examples, each having a hard coat layer formed from a curable composition according to the present invention, exhibit superior yellowing resistance under UV irradiation.

### <Examples 11-13 and Comparative Example 11>

A hard coat layer was formed in the same manner as in Example 1 except for changing the amounts of the components of the curable composition as shown in Table 2. The samples obtained were each evaluated by the method described above under the heading <Cracking Resistance Test>. The results are shown in Table 2.

**Table 2-1**

| | | | Example 11 | | | Example 12 | | |
|---|---|---|---|---|---|---|---|---|
| Curable compositio n | | | Amount (mass %) | Active ingredient s (mass %)*1 | Cured product (mass %)* 2 | Amount (mass %) | Active ingredient s (mass %)*1 | Cured product (mass %)* 2 |
| | Inorganic oxide | Silica sol | 45.5 | 50.6 | 58.1 | 45.1 | 49.2 | 56.3 |
| | Organosilan e compound | Si-1 | 11.5 | 44.5 | 36.3 | 11.5 | 43.3 | 35.1 |
| | Curing catalyst | Al(acac)₃ | 0.6 | 2.3 | 2.6 | 0.6 | 2.2 | 2.6 |
| | UV absorber | UV-1 | 0.7 | 2.6 | 3.0 | 1.4 | 5.2 | 6.0 |
| | Solvent | PGM | 20.2 | - | - | 20.1 | - | - |
| | | MeOH | 21.5 | - | - | 21.3 | - | - |
| Evaluation | Cracking resistance test | | A | | | A | | |

| | | | | | | | | |
|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction | | | | | | | | |

**Table 2-2**

| | | | Example 13 | | | Comp. Example 11 | | |
|---|---|---|---|---|---|---|---|---|
| Curable compositi on | | | Amount (mass %) | Active ingredien ts (mass %) * 1 | Cured product (mass %) * 2 | Amount (mass %) | Active ingredien ts (mass %)* 1 | Cured product (mass %)*2 |
| | Inorganic oxide | Silica sol | 44.8 | 47.8 | 54.5 | 45.8 | 51.9 | 59.9 |
| | Organosilan e compound | Si-1 | 11.4 | 42.1 | 34.0 | 11.6 | 45.7 | 37.4 |
| | Curing catalyst | Al(acac)₃ | 0.6 | 2.2 | 2.5 | 0.6 | 2.4 | 2.7 |
| | UV absorber | UV-1 | 2.1 | 7.9 | 9.0 | - | - | - |
| | Solvent | PGM | 20.0 | - | - | 20.4 | - | - |
| | | MeOH | 21.2 | - | - | 21.6 | - | - |
| Evaluatio n | Cracking resistance test | | A | | | E | | |

| | | | | | | | | |
|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction | | | | | | | | |

The abbreviations shown in Table 2 have the same meanings as those of Table 1.

As can be seen from comparison of the Examples with the Comparative Example, the hard coat layers of the Examples, each formed from a curable composition according to the present invention, exhibit superior cracking resistance under light irradiation and high-humidity conditions.

## Claims

1. An optical member comprising
(i) a plastic substrate and
(ii) a hard coat layer which is a cured product of a curable composition comprising
- an inorganic oxide and
- a UV-absorber, which is a compound of formula (1): 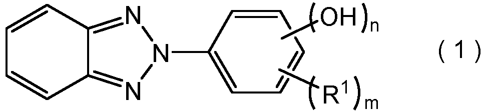 wherein n is an integer of 1-3, R¹ is an aliphatic C₁₋₃-hydrocarbon group, and m is 0 or 1;
wherein the content of the UV-absorber in the cured product is 0.5-15 mass%.

2. The optical member of claim 1, wherein the UV-absorber comprises an organic compound having at least one hydroxy group.

3. The optical member of claim 1 or 2, wherein the total content of titanium oxide, zirconium oxide, tantalum oxide, antimony oxide, tin oxide, tungsten oxide, and yttrium oxide in the curable composition is 0-50 mass% per 100 mass% of the total amount of inorganic oxide.

4. The optical member of any of claims 1-3, wherein the thickness of the hard coat layer is 0.5-50 µm.

5. The optical member of any of claims 1-4, wherein the hard coat layer is formed on both surfaces of the plastic substrate.

6. The optical member of any of claims 1-5, which is an eyeglass lens.

7. A method for producing an optical member, comprising coating a curable composition comprising an inorganic oxide and, per 100 mass% of the total amount of ingredients other than a solvent (including water) contained in the curable composition, 0.5-15 mass% of a UV-absorber, which is a compound of formula (1): 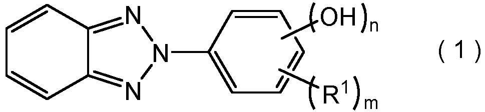 wherein n is an integer of 1-3, R¹ is an aliphatic C₁₋₃-hydrocarbon group, and m is 0 or 1, onto a plastic substrate and curing the composition to form a hard coat layer.

## Patentansprüche

1. Optisches Element, umfassend
(i) ein Kunststoffsubstrat und
(ii) eine Hartbeschichtungsschicht, die ein ausgehärtetes Produkt einer härtbaren Zusammensetzung ist, umfassend
- ein anorganisches Oxid und
- einen UV-Absorber, der eine Verbindung der Formel (1) ist: 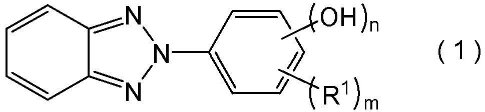
worin n eine ganze Zahl von 1-3 ist, R¹ eine aliphatische C₁₋₃-Kohlenwasserstoffgruppe ist und m 0 oder 1 ist;
wobei der Gehalt des UV-Absorbers in dem gehärteten Produkt 0,5-15 Massen-% beträgt.

2. Optisches Element gemäß Anspruch 1, wobei der UV-Absorber eine organische Verbindung mit mindestens einer Hydroxygruppe umfasst.

3. Optisches Element gemäß Anspruch 1 oder 2, wobei der Gesamtgehalt an Titanoxid, Zirkoniumoxid, Tantaloxid, Antimonoxid, Zinnoxid, Wolframoxid und Yttriumoxid in der härtbaren Zusammensetzung 0-50 Massen-% pro 100 Massen-% der Gesamtmenge an anorganischem Oxid beträgt.

4. Optisches Element gemäß mindestens einem der Ansprüche 1-3, wobei die Dicke der Hartbeschichtungsschicht 0,5-50 µm beträgt.

5. Optisches Element gemäß mindestens einem der Ansprüche 1-4, wobei die Hartbeschichtungsschicht auf beiden Oberflächen des Kunststoffsubstrats ausgebildet ist.

6. Optisches Element gemäß mindestens einem der Ansprüche 1-5, das ein Brillenglas ist.

7. Verfahren zur Herstellung eines optischen Elements, umfassend das Beschichten einer härtbaren Zusammensetzung, umfassend ein anorganisches Oxid und, pro 100 Massen-% der Gesamtmenge an in der härtbaren Zusammensetzung enthaltenen Bestandteilen außer einem Lösungsmittel (einschließlich Wasser), 0,5-15 Massen-% eines UV-Absorbers, der eine Verbindung der Formel (1) ist: 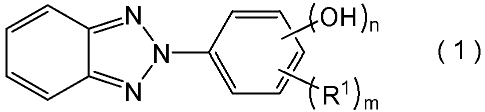 worin n eine ganze Zahl von 1-3 ist, R¹ eine aliphatische C₁₋₃-Kohlenwasserstoffgruppe ist und m 0 oder 1 ist, auf ein Kunststoffsubstrat und Aushärten der Zusammensetzung, um eine Hartbeschichtungsschicht zu bilden.

## Revendications

1. Élément optique comprenant
(i) un substrat en plastique et
(ii) une couche de revêtement dur qui est un produit durci d'une composition durcissable comprenant
- un oxyde inorganique et
- un absorbeur d'UV, qui est un composé de formule (1) : 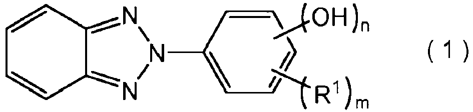
dans lequel n est un entier de 1 à 3, R¹ est un groupe hydrocarboné aliphatique en C₁₋₃, et m est 0 ou 1 ;
dans lequel la teneur de l'absorbeur d'UV dans le produit durci est de 0,5 à 15 % en masse.

2. Élément optique selon la revendication 1, dans lequel l'absorbeur d'UV comprend un composé organique présentant au moins un groupe hydroxy.

3. Élément optique selon la revendication 1 ou 2, dans lequel la teneur totale en oxyde de titane, oxyde de zirconium, oxyde de tantale, oxyde d'antimoine, oxyde d'étain, oxyde de tungstène et oxyde d'yttrium dans la composition durcissable est de 0 à 50 % en masse par 100 % en masse de la quantité totale d'oxyde inorganique.

4. Élément optique selon l'une quelconque des revendications 1 à 3, dans lequel l'épaisseur de la couche de revêtement dur est de 0,5 à 50 µm.

5. Élément optique selon l'une quelconque des revendications 1 à 4, dans lequel la couche de revêtement dur est formée sur les deux surfaces du substrat en plastique.

6. Élément optique selon l'une quelconque des revendications 1 à 5, qui est un verre de lunettes.

7. Procédé de production d'un élément optique, comprenant un revêtement d'une composition durcissable comprenant un oxyde inorganique et, par 100 % en masse de la quantité totale d'ingrédients autres qu'un solvant (incluant l'eau) contenus dans la composition durcissable, 0,5 à 15 % en masse d'un absorbeur d'UV, qui est un composé de formule (1) : 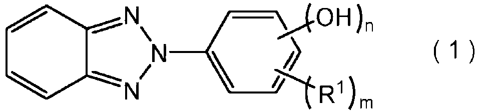 dans lequel n est un entier de 1 à 3, R¹ est un groupe hydrocarboné aliphatique en C₁₋₃, et m est 0 ou 1, sur un substrat en plastique et un durcissement de la composition pour former une couche de revêtement dur.
